# EUROPÄISCHE PATENTSCHRIFT

(11) **EP 1 778 507 B1**
(45) Veröffentlichungstag und Bekanntmachung des Hinweises auf die Patenterteilung: **16.01.2008**
(21) Anmeldenummer: 05776357.5
(22) Anmeldetag: 02.08.2005
(51) Int. Cl.: B60G 17/00, B60G 17/019, B60G 7/00, F16C 11/06, G01B 7/30

(54) **KUGELGELENK FÜR EIN KRAFTFAHRZEUG**
BALL JOINT FOR A MOTOR VEHICLE
ROTULE POUR VEHICULE AUTOMOBILE

(30) Priorität: 16.08.2004 DE 102004039781
(43) Veröffentlichungstag der Anmeldung: 02.05.2007
(73) Patentinhaber: ZF FRIEDRICHSHAFEN AG, 88038 Friedrichshafen (DE)
(72) Erfinder: SPRATTE, Joachim, 49090 Osnabrück (DE); ERSOY, Metin, 65396 Walluf (DE)
(86) Internationale Anmeldenummer: PCT/DE2005/001357
(87) Internationale Veröffentlichungsnummer: WO 2006/018001

(56) Entgegenhaltungen:
- EP-A- 0 617 260
- WO-A-03/052284
- DE-C1- 3 738 753
- DE-C1- 4 429 856
- DE-C1- 10 110 738
- FR-A- 2 833 321
- PATENT ABSTRACTS OF JAPAN Bd. 012, Nr. 182 (M-702), 27. Mai 1988 (1988-05-27) & JP 62 292915 A (MUSASHI SEIMITSU IND CO LTD), 19. Dezember 1987 (1987-12-19)
- PATENT ABSTRACTS OF JAPAN Bd. 013, Nr. 120 (P-846), 24. März 1989 (1989-03-24) -& JP 63 292001 A (MUSASHI SEIMITSU IND CO LTD), 29. November 1988 (1988-11-29)
- PATENT ABSTRACTS OF JAPAN Bd. 013, Nr. 118 (M-806), 23. März 1989 (1989-03-23) -& JP 63 293318 A (MUSASHI SEIMITSU IND CO LTD), 30. November 1988 (1988-11-30)

## Beschreibung

Die vorliegende Erfindung betrifft ein Kugelgelenk für ein Kraftfahrzeug, mit einem eine Wandung, einen Boden und eine Öffnung aufweisenden Gehäuse, einem eine Gelenkkugel und einen Zapfen aufweisenden Kugelzapfen, der mit der Gelenkkugel drehbar und schwenkbar in dem Gehäuse gelagert ist und sich durch die Öffnung hindurch aus dem Gehäuse heraus erstreckt, einem elektronischen Bauelement, welches in dem Gehäuse angeordnet ist, und einer in dem Gehäuse angeordneten, elektrisch leitenden Verbindung, welche elektrisch mit dem Bauelement verbunden ist.

Lenker sind wesentliche Bestandteile der Fahrwerke, die das Rad mit der Karosserie verbinden und bestehen aus einem Kraftübertragungskörper aus Metall und an den Enden angebrachten Krafteinleitungspunkten (Gelenkpunkten), wobei die radaufhängungsseitige Verbindung in der Regel als Kugelgelenk ausgeführt ist. In modernen Fahrzeugen findet man zunehmend Höhenstandssensoren, welche die Position des Rads zur Karosserie liefern. Üblicherweise sind diese Sensoren als Drehgeber ausgeführt, der an der Karosserie befestigt und über ein Gestänge an dem Lenker angekoppelt ist. Seit einiger Zeit gibt es Überlegungen, diese und andere Funktionalitäten des Sensors sowie die Funktionalitäten anderer Sensoren in das Kugelgelenk zu integrieren.

Aus der EP 0 617 260 A1 ist ein Kugelgelenk bekannt, wobei ein Kugelzapfen mit einem Magneten versehen und in einer einstückig mit einem Gehäuse ausgebildeten Kugelpfanne gelagert ist. Ein Einsatz ist über eine Verrastung mit dem Gehäuse verbunden und über eine Dichtung gegenüber diesem abgedichtet. Der Einsatz weist einen Steckverbinder auf, der elektrisch leitend mit einer Leiterplatte in dem Gehäuse verbunden ist. Die Leiterplatte ist auf einem einstückig mit dem Einsatz ausgebildeten Halter angeordnet und trägt einen magnetfeldempfindlichen Fühler.

Weiterhin offenbart das Document WO 03/052284 ein Kugelgelenk mit einem electronischen Bauelement gemäß den Merkmale des Oberbegriffs des Anspruchs 1.

Falls der Gehäusebodenbereich, in dem der Fühler sitzt, zur Fahrbahn hin angeordnet ist, besteht die Gefahr, dass der Einsatz oder der Steckverbinder durch Steinschlag, Schmutz oder Feuchtigkeit beschädigt wird, so dass die Funktionsfähigkeit des Fühlers, der Leiterplatte und/oder des Steckverbinders durch über den Bodenbereich eindringende Verunreinigungen beeinträchtigt werden kann.

Ausgehend von diesem Stand der Technik liegt der Erfindung die Aufgabe zugrunde, ein Kugelgelenk der eingangs genannten Art derart weiterzubilden, dass die Möglichkeit einer Beeinträchtigung des Bauelements und der elektrischen Verbindung durch über den Bodenbereich eindringende Verunreinigungen reduziert werden kann, wenn der Boden des Kugelgelenks zur Fahrbahn hin angeordnet ist.

Diese Aufgabe wird durch ein Kugelgelenk nach Anspruch 1 gelöst. Bevorzugte Weiterbildungen sind in den Unteransprüchen gegeben.

Das erfindungsgemäße Kugelgelenk für ein Kraftfahrzeug weist ein Gehäuse mit einer Wandung, einen Boden und einer Öffnung, einen eine Gelenkkugel und einen Zapfen aufweisenden Kugelzapfen, der mit der Gelenkkugel drehbar und schwenkbar in dem Gehäuse gelagert ist und sich durch die Öffnung hindurch aus dem Gehäuse herauserstreckt, ein elektronisches Bauelement, welches in dem Gehäuse angeordnet ist und eine in dem Gehäuse angeordnete elektrisch leitende Verbindung auf, welche elektrisch mit dem Bauelement verbunden ist, wobei die elektrisch leitende Verbindung sich von dem Bauelement aus im Bereich der Öffnung oder durch die Öffnung aus dem Gehäuse herauserstreckt.

Dadurch, dass die leitende Verbindung im Bereich der Öffnung oder durch die Öffnung des erfindungsgemäßen Kugelgelenks herausgeführt ist, kann der Bodenbereich des Kugelgelenks von Durchführungen für elektrische Leitungen freigehalten werden. Da somit solche Durchführungen auch nicht mehr beschädigt werden können, wenn Steinschlag, Schmutz und Feuchtigkeit auf den Boden einwirken, ist die Möglichkeit einer Beeinträchtigung des Bauelements und der leitenden Verbindung durch über den Bodenbereich eindringende Verunreinigungen reduziert, wenn der Boden des Kugelgelenks zur Fahrbahn hin angeordnet ist.

Der Boden ist dabei bevorzugt ein geschlossener Boden und kann fest mit der Wandung verbunden oder einstückig mit dieser ausgebildet sein. In dem Fall, in dem der Boden einstückig mit der Wandung ausgebildet ist, kann auf Dichtungen zum Abdichten des Bodens gegenüber der Wandung verzichtet werden. Somit können solche Dichtungen auch nicht mehr durch Steinschlag, Schmutz und Feuchtigkeit beschädigt werden, so dass eine weitere Schwachstelle des Bodenbereichs hinsichtlich des Eindringens von Verunreinigungen in das Gehäuse beseitigt ist, wenn der Boden des erfindungsgemäßen Kugelgelenks zur Fahrbahn hin angeordnet ist.

Das Gehäuse kann aus Metall bestehen, wobei die Wandung und der Boden insbesondere aus einem einteiligen Blechteil hergestellt sind. Somit kann das Bauelement gegen äußere elektromagnetische Störungen, die z.B. durch naheliegende Aggregate, Magnetbremsen von Zügen oder durch das natürliche Magnetfeld entstehen können, abgeschirmt werden.

Bei der Integration von elektronischen Bauelementen in Kugelgelenke hat es sich bewährt, diese Bauelemente im Bodenbereich des Kugelgelenks anzuordnen. Somit ist das erfindungsgemäße Kugelgelenk bevorzugt derart ausgebildet, dass die Öffnung dem Boden gegenüberliegt, das Bauelement zwischen Gelenkkugel und dem Boden angeordnet ist und die leitende Verbindung zumindest abschnittsweise zwischen Gelenkkugel und Wandung verläuft. Dabei kann die elektrisch leitende Verbindung in geeigneter Weise elektrisch gegenüber dem Gehäuse isoliert sein.

Zur besseren Lagerung der Gelenkkugel in dem Gehäuse kann in diesem eine die Gelenkkugel aufnehmende Kugelschale angeordnet sein, wobei die elektrisch leitende Verbindung bevorzugt zumindest abschnittsweise zwischen der Kugelschale und der Wandung verläuft. Die Kugelschale weist dabei insbesondere Federelemente auf, so dass die Gelenkkugel in die Kugelschal eingeschnappt werden kann. Ferner ist zur Verbesserung der Gleiteigenschaften ein Schmierstoff in das Gehäuse einbringbar.

Mit der Kugelschale kann ein in dem Gehäuse angeordneter Bauelementhalter verbunden sein, der das Bauelement trägt. Dabei ist das Bauelement bevorzugt über eine Schnappverbindung an dem Bauelementhalter befestigt, der seinerseits über Schnappelemente mit der Kugelschale verbunden sein kann. Ferner kann der Bauelementhalter als Schutz für das Bauelement vor direktem Kontakt mit in das Gehäuse eingebrachtem Schmierstoff dienen.

An der Wandung kann ein die Öffnung umschließendes und insbesondere einen S-förmigen Querschnitt aufweisendes Verschlusselement befestigt sein, welches eine durchgehende Öffnung oder Durchgangsbohrung aufweist, durch welche hindurch sich die elektrisch leitende Verbindung erstreckt Dabei ist an dem Verschlusselement bevorzugt ein Dichtungsbalg befestigt, der sich von dem Verschlusselement aus bis zum Gelenkzapfen erstreckt, wobei die Durchgangsbohrung von dem Dichtungsbalg abgedichtet ist.

Die leitende Verbindung ist z.B. über Löten, Nieten oder Schweißen mit dem Bauelement verbunden und kann ein oder mehrere elektrische Leitungen aufweisen, insbesondere in Form eines ein- oder mehradrigen Kabels ausgebildet sein. Bevorzugt ist die leitende Verbindung aber als eine flexible Leiterplatte ausgebildet, die z.B. in einen flexiblen Kunststoff eingebettete Leiterbahnen aufweist.

Das Bauelement kann zum Erfassen einer Verdrehung und/oder einer Auslenkung des Kugelzapfens gegenüber dem Kugelgelenkgehäuse dienen. Dafür kann in dem Kugelzapfen ein Signalgeber wie z.B. ein Magnet eingebracht sein, wobei das Bauelement einen Sensor, insbesondere einen Magnetfeldsensor aufweist. Der Magnet ist dabei bevorzugt in dem dem Zapfen abgewandten Bereich der Gelenkkugel eingebracht und insbesondere als Permanentmagnet ausgebildet. Die Formulierung, dass das Bauelement einen Sensor bzw. Magnetfeldsensor aufweist, ist nicht einschränkend zu verstehen. Insbesondere ist es auch möglich, dass das Bauelement als Sensor bzw. Magnetfeldsensor ausgebildet ist. Bei herkömmlichen Sensorbauelementen ist der eigentliche Sensor aber regelmäßig in einem Gehäuse integriert mit zusätzlichen Schaltkreisen z.B. zur Temperaturkompensation, Linerarisierung usw. ausgebildet ist, die selbst keine Sensorfunktion ausüben.

Die der Erfindung zugrundliegende Aufgabe wird ferner durch ein Kraftfahrzeugbauteil mit einem an diesem befestigten Kugelgelenk gelöst, welches ein erfindungsgemäßes Kugelgelenk ist und gemäß aller zuvor beschriebenen Ausgestaltungen weitergebildet sein kann. Insbesondere sitzt das Kugelgelenk mit seinem Gehäuse in einer Ausnehmung des Kraftfahrzeugbauteils, welches z.B. ein Lenker, bevorzugt ein Längslenker oder Querlenker ist. Ferner kann das Kugelgelenk an nur einer Stelle oberhalb des gefährdeten Bereichs an Verbindungsstellen gehalten werden.

Damit das Bauelement auf einfache Weise mit einer außerhalb des Kugelgelenks angeordneten Elektronikeinheit verbunden werden kann, ist an dem aus dem Kugelgelenk herausgeführten Ende der elektrischen Verbindung ein Steckverbinder angeschlossen, insbesondere angelötet. Dieser Steckverbinder ist bevorzugt über eine Schnappverbindung an dem Kraftfahrzeugbauteil befestigt, die z.B. eine in diesem vorgesehene Bohrung durchgreift. Alternativ kann der Steckverbinder aber auch über eine Schraubverbindung oder Vernietung mit dem Kraftfahrzeugbauteil verbunden werden.

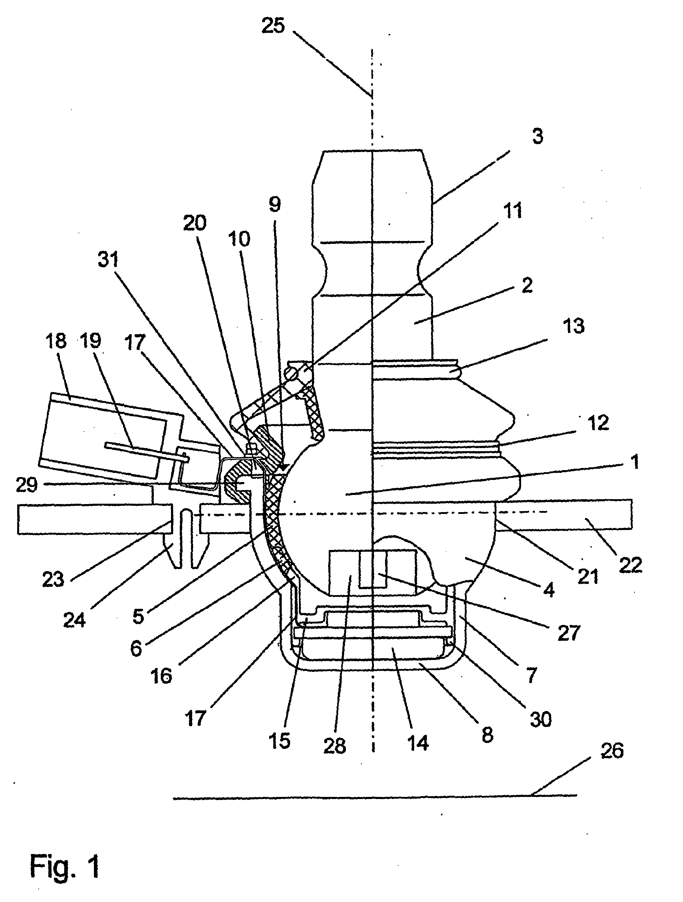

Die Erfindung wird nachfolgend anhand einer bevorzugten Ausführungsform unter Bezugnahme auf die Zeichnung beschrieben. In der Zeichnung zeigt
- Fig. 1: eine schematische, teilweise geschnittene Seitenansicht einer Ausführungsform des erfindungsgemäßen Kugelgelenks.

Aus Fig.1 ist eine teilweise geschnittene Seitenansicht einer Ausführungsform des erfindungsgemäßen Kugelgelenks ersichtlich, wobei ein eine Gelenkkugel 1 und einen Zapfen 2 aufweisender Kugelzapfen 3 mit der Gelenkkugel 1 in einem Gehäuse 4 drehbar und schwenkbar gelagert ist Der Kugelzapfen 3 erstreckt sich mit dem Zapfen 2 durch eine Öffnung 9 aus dem Gehäuse 4 heraus, wobei die Gelenkkugel 1 in einer in dem Gehäuse 4 angeordneten Kugelschale 5 sitzt, an deren unterem Ende Federelemente 6 ausgebildet sind. Das Gehäuse weist eine Wandung 7, einen Boden 8 und die Öffnung 9 auf, welche dem Boden 8 gegenüberliegt, der geschlossen und einstückig mit der Wandung 7 ausgebildet ist. Somit bilden der Boden 8 und die Öffnung 9 jeweils eine Stirnseite des aus der im Wesentlichen rotationssymmetrischen Wandung 7 gebildeten Körpers. An ihrem der Öffnung 9 zugewandten Ende weist die Wandung 7 eine Außenschulter 29 auf, welche rings der Öffnung 9 verläuft.

Ferner ist an dem der Öffnung 9 zugewandten Ende der Wandung 7 ein ringförmiges, die Öffnung 9 umschließendes Verschlusselement 10 befestigt, welches einen im Wesentlichen S-förmigen Querschnitt aufweist und die Außenschulter 29 untergreift. An dem Verschlusselement 10 ist ein Dichtungsbalg 11 festgelegt, der sich von dem Verschlusselement 10 aus von der Öffnung 9 wegerstreckt und an dem Zapfen 2 des Kugelzapfens 3 anliegt. Dabei ist der Dichtungsbalg 11 gehäuseseitig über einen ersten Ring 12 und zapfenseitig über einen zweiten Ring 13 gesichert.

Das Gehäuse 4 ist im Bodenbereich vergrößert ausgebildet, wobei zwischen der Gelenkkugel 1 und dem Boden 8 ein Sensor 14 angeordnet ist, der an einem Bauelementhalter (Sensorhalter) 15 befestigt ist Der Sensor 14 ist dabei über eine Schnappverbindung 30 an dem Sensorhalter 15 gesichert, der über Schnappelemente 16 an der Kugelschale 5 festgelegt ist. Der Sensor 14 ist auf der der Gelenkkugel 1 abgewandten Seite des Sensorhalters 15 angeordnet, so dass dieser als Schutz gegen direkten Kontakt des Sensors 14 mit einem in die Kugelschale 5 eingebrachten Schmierstoff dient

Über eine flexible Leiterplatte 17 ist der Sensor 14 mit einem außerhalb des Gehäuses 4 angeordneten Steckverbinder 18 elektrisch verbunden, wobei sensorseitig die Leiterbahnen der flexiblen Leiterplatte 17 an den Kontakten des Sensors 14 angelötet sind und steckverbinderseitig die Leiterbahnen der flexiblen Leiterplatte an elektrischen Kontakten 19 des Steckverbinders 18 angelötet sind. Die flexible Leiterplatte 17 erstreckt sich dabei ausgehend von dem Sensor 14 entlang der Wandung 7, durch die Öffnung 9 und durch eine in dem Verschlusselement 10 vorgesehene Durchgangsbohrung 20 aus dem Gehäuse 4 des Kugelgelenks heraus bis zu dem Steckverbinder 18. Im Bereich der Kugelschale 5 verläuft die flexible Leiterplatte 17 dabei zwischen der Wandung 7 und der Kugelschale 5, wobei die durchgehende Öffnung 20 von einem zwischen dem ersten Ring 12 und dem Verschlusselement 10 vorgesehenen Bereich 31 des Dichtungsbalges 11 abgedichtet ist.

Das Gehäuse 4 sitzt mit seiner Wandung 7 in einer Ausnehmung 21 eines Kraftfahrzeuglenkers 22, in welchem im Abstand zu der Ausnehmung 21 eine Bohrung 23 vorgesehen ist, die von einem Schnappelement 24 des Steckverbinders 18 durchgriffen ist, wodurch der Steckverbinder 18 am Lenker 22 festgelegt ist

Wie aus Fig.1 ersichtlich, sitzt das Gehäuse 4 derart in der Ausnehmung 21, dass der Steckverbinder 18, der sich aus dem Gehäuse 4 herauserstreckende Teil der flexiblen Leiterplatte 17, die Durchgangsbohrung 20 im Verschlusselement 10 und der Dichtungsbalg 11 oberhalb des Lenkers 22 angeordnet sind, wohingegen der Boden 8 unterhalb des Lenkers 22 angeordnet ist. Dabei ist das Kugelgelenk mit seinem Boden 8 einer schematisch angedeuteten Fahrbahn 26 zugewandt.

Da der Boden 8 vollständig geschlossen und einstückig mit der Wandung 7 ausgebildet ist, wird der Sensor vor Steinschlag und Spritzwasser von der Gelenkunterseite her geschützt. Ferner sind der Steckverbinder 18, der sich aus dem Gehäuse 4 herauserstreckende Teil der flexiblen Leiterplatte 17 sowie die Durchgangsbohrung 20 im Verschlusselement 10 an der der Fahrbahn 26 abgewandten Seite des Lenkers 22 angeordnet und werden somit von diesem gegen Steinschlag und Spritzwasser von der Fahrbahn her abgeschirmt.

Der Sensor 14 ist ein magnetfeldempfindlicher Sensor, der das Magnetfeld eines Permanentmagneten 27 erfassen kann, welcher in einer Senkung 28 der Gelenkkugel 1 sitzt. Im unausgelenkten Zustand des Kugelzapfens 3 fällt dessen Längsachse mit der Längsachse 25 des Gehäuses 4 zusammen. Wird der Kugelzapfen 3 gegenüber dem Gehäuse 4 ausgelenkt, verändert sich das auf den Sensor 14 einwirkende Magnetfeld, so dass der Winkel zwischen der Längsachse 25 des Gehäuses 4 und der Längsachse des ausgelenkten Kugelzapfens 3 mit Hilfe des Sensors 14 gemessen werden kann. Alternativ oder zusätzlich kann von dem Sensor 14 eine Verdrehung des Kugelzapfens 3 um seine Längsachse erfasst werden.

Nachfolgend wird der Zusammenbau des Kugelgelenks beschrieben. Bei der Montage des Kugelgelenks wird zunächst der Kugelzapfen 3 von unten über die Federelemente 6, die an der Kugelschale 5 angeformt sind, in die Kugelschale 5 eingeschnappt. Dann wird der Sensorhalter 15, in den bereits der Sensor 14 eingeschnappt ist, an dem wiederum die flexible Leiterplatte 17 montiert ist, über die Schnappelemente 16 mit der Kugelschale 5 verbunden. Die so vormontierte Einheit wird dann in das Kugelgelenkgehäuse 4 eingeführt. Dann wird die flexible Leiterplatte 17 durch die Durchgangsbohrung 20 im Verschlusselement 10 gefädelt, woraufhin das Verschlusselement 10 und der Dichtungsbalg 11 montiert werden. Nun wird der Steckverbinder 18 an die flexible Leiterplatte 17 angelötet. Nach der Montage des so erstellten Kugelgelenks in den Lenker 22 wird die Steckverbindung 18 in den Lenker 22 eingeschnappt.

### Bezugszeichenliste

- 1: Gelenkkugel
- 2: Zapfen
- 3: Kugelzapfen
- 4: Gehäuse
- 5: Kugelschale
- 6: Federelemente
- 7: Gehäusewandung
- 8: Gehäuseboden
- 9: Gehäuseöffnung
- 10: ringförmiges Verschlusselement
- 11: Dichtungsbalg
- 12: gehäuseseitiger Ring
- 13: zapfenseitiger Ring
- 14: Sensor
- 15: Sensorhalter
- 16: Schnappelemente
- 17: flexible Leiterplatte
- 18: Steckverbinder
- 19: elektrische Kontakte des Steckverbinders
- 20: Durchgangsbohrung im Verschlusselement
- 21: Ausnehmung in Kraftfahrzeuglenker
- 22: Kraftfahrzeuglenker
- 23: Bohrung in Kraftfahrzeuglenker
- 24: Schnappelement des Steckverbinders
- 25: Längsachse des Kugelgelenks
- 26: Fahrbahn
- 27: Permanentmagnet
- 28: Senkung in Gelenkkugel
- 29: ringförmige Außenschulter an Wandung
- 30: Schnappverbindung
- 31: die Durchgangsbohrung abdichtender Bereich des Dichtungsbalgs

## Patentansprüche

1. Kugelgelenk für ein Kraftfahrzeug, mit
- einem eine Wandung (7), einen Boden (8) und eine Öffnung (9) aufweisenden Gehäuse (4),
- einem eine Gelenkkugel (1) und einen Zapfen (2) aufweisenden Kugelzapfen (3), der mit der Gelenkkugel (1) drehbar und schwenkbar in dem Gehäuse (4) gelagert ist und sich durch die Öffnung (9) hindurch aus dem Gehäuse (4) heraus erstreckt,
- einem elektronischen Bauelement (14), welches in dem Gehäuse (4) angeordnet ist und
- einer in dem Gehäuse (4) angeordneten elektrisch leitenden Verbindung (17), welche elektrisch mit dem Bauelement (14) verbunden ist,
- **dadurch gekennzeichnet, dass** die elektrisch leitende Verbindung (17) sich von dem Bauelement (14) aus im Bereich der Öffnung (9) oder durch die Öffnung (9) aus dem Gehäuse (4) herauserstreckt.

2. Kugelgelenk nach Anspruch 1, **dadurch gekennzeichnet, dass** der Boden (8) geschlossen und einstückig mit der Wandung (7) ausgebildet ist.

3. Kugelgelenk nach Anspruch 1 oder 2, **dadurch gekennzeichnet, dass** die Öffnung (9) dem Boden (8) gegenüberliegt, das Bauelement (14) zwischen der Gelenkkugel (1) und dem Boden (8) angeordnet ist und die leitende Verbindung (17) zumindest abschnittsweise zwischen der Gelenkkugel (1) und der Wandung (7) verläuft.

4. Kugelgelenk nach einem der vorangehenden Ansprüche, **dadurch gekennzeichnet, dass** in dem Gehäuse (4) eine die Gelenkkugel (1) aufnehmende Kugelschale (5) angeordnet ist.

5. Kugelgelenk nach Anspruch 4, **dadurch gekennzeichnet, dass** die elektrisch leitende Verbindung (17) zumindest abschnittsweise zwischen der Kugelschale (5) und der Wandung (7) verläuft.

6. Kugelgelenk nach Anspruch 4 oder 5, **dadurch gekennzeichnet, dass** an der Kugelschale (5) ein in dem Gehäuse (4) angeordneter Bauelementhalter (15) befestigt ist, der das Bauelement (14) trägt.

7. Kugelgelenk nach einem der vorangehenden Ansprüche, **dadurch gekennzeichnet, dass** an der Wandung (7) ein die Öffnung (9) umschließendes, ringförmiges Verschlusselement (10) befestigt ist, welches eine durchgehende Öffnung (20) aufweist, durch welche hindurch sich die elektrisch leitende Verbindung (17) erstreckt.

8. Kugelgelenk nach Anspruch 7, **dadurch gekennzeichnet, dass** an dem Verschlusselement (10) ein Dichtungsbalg (11) befestigt ist, der sich von dem Verschlusselement (10) aus bis zum Zapfen (2) erstreckt, wobei die durchgehende Öffnung (20) des Verschlusselements (10) von dem Dichtungsbalg (11) abgedichtet ist.

9. Kugelgelenk nach einem der vorangehenden Ansprüche, **dadurch gekennzeichnet, dass** die elektrisch leitende Verbindung (17) eine flexible Leiterplatte ist.

10. Kugelgelenk nach einem der vorangehenden Ansprüche, **dadurch gekennzeichnet, dass** in der Gelenkkugel (1) ein Magnet (27) angeordnet ist und das Bauelement (14) einen Magnetfeldsensor aufweist.

11. Kraftfahrzeugbauteil mit einem Kugelgelenk nach einem der vorangehenden Ansprüche, **dadurch gekennzeichnet, dass** das Kugelgelenk an dem Kraftfahrzeugbauteil (22) befestigt ist.

12. Kraftfahrzeugbauteil nach Anspruch 11, **dadurch gekennzeichnet, dass** das Kugelgelenk mit seinem Gehäuse (4) in einer Ausnehmung (21) des Kraftfahrzeugbauteils (22) sitzt

13. Kraftfahrzeugbauteil nach Anspruch 11 oder 12, **dadurch gekennzeichnet, dass** an dem aus dem Kugelgelenk herausgeführten Ende der elektrischen Verbindung (17) ein Steckverbinder (18) angeschlossen ist.

14. Kraftfahrzeugbauteil nach Anspruch 13, **dadurch gekennzeichnet, dass** der Steckverbinder (18) über eine Schnappverbindung (24) an dem Kraftfahrzeugbauteil (22) befestigt ist.

## Claims

1. Ball joint for a motor vehicle, having
- a housing (4) that comprises a wall (7), a base (8) and an opening (9),
- a ball-ended spindle (3) that comprises a joint ball (1) and a spindle (2) and is rotatably and pivotably mounted by the joint ball (1) in the housing (4) and extends out of the housing (4) through the opening (9),
- an electronic component (14) that is disposed in the housing (4), and
- an electrically conductive connection (17) that is disposed in the housing (4) and electrically connected to the component (14),
- **characterized in that** the electrically conductive connection (17) extends out from the component (14) in the region of the opening (9) or out of the housing (4) though the opening (9).

2. Ball joint according to claim 1, **characterized in that** the base (8) is closed and formed integrally with the wall (7).

3. Ball joint according to claim 1 or 2, **characterized in that** the opening (9) lies opposite the base (8), the component (14) is disposed between the joint ball (1) and the base (8), and the conductive connection (17) extends at least in sections between the joint ball (1) and the wall (7).

4. Ball joint according to one of the preceding claims, **characterized in that** a ball socket (5) that receives the joint ball (1) is disposed in the housing (4).

5. Ball joint according to claim 4, **characterized in that** the electrically conductive connection (17) extends at least in sections between the ball socket (5) and the wall (7).

6. Ball joint according to claim 4 or 5, **characterized in that** a component holder (15), which carries the component (14) and is disposed in the housing (4), is fastened to the ball socket (5).

7. Ball joint according to one of the preceding claims, **characterized in that** an annular closure element (10), which surrounds the opening (9), is fastened to the wall (7) and has a through-opening (20), through which the electrically conductive connection (17) extends.

8. Ball joint according to claim 7, **characterized in that** a bellows-type seal (11) is fastened to the closure element (10) and extends from the closure element (10) to the spindle (2), wherein the through-opening (20) of the closure element (10) is sealed by the bellows-type seal (11).

9. Ball joint according to one of the preceding claims, **characterized in that** the electrically conductive connection (17) is a flexible printed-circuit board.

10. Ball joint according to one of the preceding claims, **characterized in that** a magnet (27) is disposed in the joint ball (1) and the component (14) comprises a magnetic field sensor.

11. Motor vehicle structural part having a ball joint according to one of the preceding claims, **characterized in that** the ball joint is fastened to the motor vehicle structural part (22).

12. Motor vehicle structural part according to claim 11, **characterized in that** the ball joint is seated by its housing (4) in a recess (21) of the motor vehicle structural part (22).

13. Motor vehicle structural part according to claim 11 or 12, **characterized in that** a plug-in connector (18) is connected to the end of the electrical connection (17) that is run out of the ball joint.

14. Motor vehicle structural part according to claim 13, **characterized in that** the plug-in connector (18) is fastened by means of a snap connection (24) to the motor vehicle structural part (22).

## Revendications

1. Articulation à rotule pour un véhicule automobile, comprenant
- un boîtier (4) comprenant une paroi (7), un fond (8) et une ouverture (9),
- un pivot à rotule (3) comprenant une rotule d'articulation (1) et un axe (2), qui est monté de façon pivotante et oscillante dans le boîtier (4) et s'étend à travers l'ouverture (9) à l'extérieur du boîtier (4),
- un composant électronique (14) disposé dans le boîtier (4), et
- une liaison électriquement conductrice (17) disposée dans le boîtier (4) et reliée au composant (14),
**caractérisée en ce que** la liaison électriquement conductrice (17) s'étend depuis le composant (14), au niveau de l'ouverture (9) ou à travers l'ouverture (9), jusqu'à l'extérieur du boîtier (4).

2. Articulation à rotule selon la revendication 1, **caractérisée en ce que** le fond (8) est fermé et est réalisé d'un seul tenant avec la paroi (7).

3. Articulation à rotule selon la revendication 1 ou 2, **caractérisé en ce que** l'ouverture (9) est opposée au fond (8), que le composant (14) est disposé entre la rotule d'articulation (1) et le fond (8), et que la liaison électriquement conductrice (17) s'étend au moins partiellement entre la rotule d'articulation (1) et la paroi (7).

4. Articulation à rotule selon l'une des revendications précédentes, **caractérisée en ce qu'**une coquille sphérique (5) recevant la rotule d'articulation (1) est disposée dans le boîtier (4).

5. Articulation à rotule selon la revendication 4, **caractérisée en ce que** la liaison électriquement conductrice (17) s'étend au moins partiellement entre la coquille sphérique (5) et la paroi (7).

6. Articulation à rotule selon la revendication 4 ou 5, **caractérisée en ce qu'**un support de composant (15) disposé dans le boîtier (4) est fixé sur la coquille sphérique (5) et porte le composant (14).

7. Articulation à rotule selon l'une des revendications précédentes, **caractérisée en ce qu'**un élément de fermeture annulaire (10) entourant l'ouverture (9) est fixé sur la paroi (7), qui comporte une ouverture traversante (20), à travers laquelle s'étend la liaison électriquement conductrice (17).

8. Articulation à rotule selon la revendication 7, **caractérisée en ce qu'**un soufflet d'étanchéité (11) est fixé sur l'élément de fermeture (10) et s'étend de l'élément de fermeture (10) jusqu'à l'axe (2), l'ouverture traversante (20) de l'élément de fermeture (10) étant fermée de façon étanche par le soufflet d'étanchéité (11).

9. Articulation à rotule selon l'une des revendications précédentes, **caractérisée en ce que** la liaison électriquement conductrice (17) est un circuit imprimé flexible.

10. Articulation à rotule selon l'une des revendications précédentes, **caractérisée en ce qu'**un aimant (27) est disposé dans la rotule d'articulation (1), et que le composant (14) comporte un détecteur de champ magnétique.

11. Composant de véhicule automobile comprenant une articulation à rotule selon l'une des revendications précédentes, **caractérisé en ce que** l'articulation à rotule est fixée sur le composant (22) du véhicule.

12. Composant de véhicule selon la revendication 11, **caractérisé en ce que** le boîtier (4) de l'articulation à rotule est logé dans un évidement (21) du composant (22) du véhicule.

13. Composant de véhicule selon la revendication 11 ou 12, **caractérisé en ce qu'**un connecteur à fiche (18) est relié à l'extrémité de la liaison électrique (17) qui ressort de l'articulation à rotule.

14. Composant de véhicule selon la revendication 13, **caractérisé en ce que** le connecteur à fiche (18) est fixé sur le composant (22) du véhicule par l'intermédiaire d'un moyen de montage à enclenchement (24).
